# EUROPÄISCHE PATENTSCHRIFT

(11) **EP 0 639 427 B1**
(45) Veröffentlichungstag und Bekanntmachung des Hinweises auf die Patenterteilung: **07.05.1997**
(21) Anmeldenummer: 94112780.5
(22) Anmeldetag: 16.08.1994
(51) Int. Cl.: B23K 35/38, B23K 9/16

(54) **Schutzgas-Lichtbogen-Schweissverfahren sowie zugehöriges Schutzgas**
Process for shielded arc welding and shielding gas therefor
Procédé de soudage à l'arc sous gaz protecteur et gaz protecteur à utiliser dans ledit procédé

(30) Priorität: 17.08.1993 DE 4327672
(43) Veröffentlichungstag der Anmeldung: 22.02.1995
(73) Patentinhaber: Linde Aktiengesellschaft, 65189 Wiesbaden (DE)
(72) Erfinder: Geipl, Herbert, Dipl.-Ing., D-82194 Gröbenzell (DE)
(74) Vertreter: Kasseckert, Rainer

(56) Entgegenhaltungen:
- EP-A- 0 544 187
- WO-A-91/13720
- DE-A- 1 565 373
- GB-A- 807 037
- PATENT ABSTRACTS OF JAPAN vol. 5, no. 131 (M-84) 21. August 1981 & JP-A-56 066 382 (DAIDO STEEL CO) 4. Juni 1981
- PATENT ABSTRACTS OF JAPAN vol. 4, no. 116 (M-27) 19. August 1980 & JP-A-55 073 479 (MITSUBISHI ELECTRIC CORP) 3. Juni 1980

## Beschreibung

Die Erfindung betrifft ein Schutzgas-Lichtbogen-Schweißverfahren gemäß dem Oberbegriff des Anspruchs 1. Die Erfindung betrifft ferner ein Schutzgas zum Lichtbogenschweißen gemäß dem Oberbegriff des Anspruchs 6.

Das Schutzgas-Lichtbogenschweißen von metallischen Werkstoffen ist in vielen Varianten und Spezifizierungen mit Schutzgasen verschiedenster Zusammensetzung bekannt (siehe EP-0 544 187 A1 und DE-24 51 591 A1). Dazu gehört das Schweißen von Standardeisenwerkstoffen, Spezialstählen oder auch das Schweißen von Nichteisenwerkstoffen unterschiedlichster Art (siehe hierzu beispielsweise die DE-33 28 272 C2 - insbesondere die Einleitung). In einer Reihe von Anwendungsfällen, beispielsweise beim Schweißen frisch oberflächenbearbeiteter Aluminium-werkstücke, Zwangslagenschweißen oder beim Schweißen verschiedener spezifischer Werkstoffgruppen z.B. hochlegierter Stähle, treten jedoch während der in üblicher Weise ausgeführten Schweißungen nicht selten Schwierigkeiten die sich in einem unruhigen Schweißvorgang mit instabilem Lichtbogen und unter Umständen in einer fehlerbehafteten Schweißungen mit Mängeln in der Schmelzverbindung zwischen Grundwerkstoff und Schweißzusatzwerkstoff äußern.

Die EP-0 544 178 A1 lehrt ein Verfahren zum Schutzgas-Lichtbogen-Schweißen von hochlegierten korrosionsbeständigen Stählen, insbesondere von Nickel- und Sonderstählen, mit einem Schutzgas, das neben Argon und/oder Helium einen Anteil an Kohlendioxid, an Sauerstoff oder an einer Mischung von Kohlendioxid und Sauerstoff von 0,01 bis 0,5 Vol.-% (100 bis 5000 vpm) enthält.

Aus der DE-24 51 591 A1 ist ein Gasgemisch zum Plasmaschweißen oder Schweißen bei anderen Schweißverfahren mit nicht abschmelzbarer Wolframelektrode bekannt, das neben Argon und/oder Helium zu 0,1 bis 1,0 Vol.-% aus Wasserstoff besteht. Der Wasserstoff soll die Oxidbildung an der Wolframelektrode verhindern.

Die Aufgabenstellung zu vorliegender Erfindung bestand daher darin, ein Schutzgas-Lichtbogen-Schweißverfahren und ein Schutzgas zum Lichtbogenschweißen anzugeben, das die geschilderten Nachteile und Negativumstände möglichst weitgehend vermindert oder vollständig abstellt.

Diese Aufgabe wird erfindungsgemäß dadurch gelöst, daß das Schutzgas in einem Anteilsbereich von 0,5 bis 4 Vol-% Wasserstoff enthält.

Bevorzugt enthält das Schutzgas mindestens 40 Vol-% Argon und 10 bis 55 Vol-% Helium.

In zumindest teilweise überraschender Weise bewirkt der erfindungsgemäße Vorschlag eine deutliche Verbesserung der eingangs geschilderten Probleme, insbesondere derjenigen in Sondersituationen wie Zwangslagenschweißen, Schweißen von korrosionsstabilen, höher- und hochlegierten Stählen und Nickelwerkstoffe, Schweißen von oberflächenbearbeiteten Alu-werkstücken und Kombinationen davon, wobei jede der niedriganteiligen Schweißgaskomponenten (CO₂, O₂ bzw. H₂) zu merklichen, spezifischen Verbesserungen führt, die bei deren Weglassen entfallen. Insbesondere wird mit dem erfindungsgemäßen Vorschlag eine extrem günstige Lichtbogenstabiltität und ein ebenso vorteilhafter Wärmeeintrag erzielt. Der erfindungsgemäße Schweißvorgang ergibt außerdem eine ausgezeichnetes Benetzungsverhalten des entstehenden Schweißbades ohne unerwünschte Spritzerbildung. Die Wirkung der Wasserstoffkomponente geht dabei einerseits in Richtung Lichtbogenstabilisierung und andererseits werden durch die reduzierende Wirkung des Wasserstoffs Oxidationen im gesamten Bereich der Schweißstelle und letzlich in der entstehenden Schweißnaht minimiert, was die korrosionstabilität insbesondere entsprechender Stähle erhöht. Den Haupteil der Lichtbogenstabilisierung liefern allerdings das in Minimalanteilen hinzugefügte Kohlendioxid oder der Sauerstoff.

Es ist zwar bekannt, daß die Lichtbogenstabilität und damit in Verbindung die Qualität des Gesamtschweißvorgangs durch die Zugabe von beispielsweise mehr als einigen Volumenprozent CO₂ oder auch O₂ verbessert werden kann - in Sonderfällen reichen hierzu auch niedrigere Anteile eben dieser Stoffe (vgl. EP- 0 544 187 A1) - jedoch ist es überraschend, daß mit den erfindungsgemäß angesprochenen Gasgemischen und ebenso mit den genannten "Spuren"-Anteilen eine derartige Einflußnahme und Verbesserung eines Lichtbogen-Schweißprozesses gelingt.

Die Anmelderin geht - ohne dies mit letzter Sicherheit zu Wissen - davon aus, daß durch die niedriganteilige Beimischung der benannten Stoffe mit relativ niedrigen Ioniserungsenergien eine Aktivierung des Schutzgases gefördert wird und zwar dadurch, daß die in Spuren vorhandenen Gase diese Aktivierung (= Ionenbildung) auslösen, da diese Zugabestoffe eben besonders leicht ionisiert werden können. Diese tragen daher zum Start und zur Aufrechterhaltung des Lichtbogens einen besonderen überproportionalen, zumindest aber initialisierenden Beitrag bei.

Durch die Anwendung des erfindungsgemäßen Schutzgases beim Lichtbogenschweißen wird also in überraschender Weise ein besonders stabil brennender Lichtbogen erhalten, der im Regelfall sogar bei erniedrigten Schweißspannungen aufrechterhalten bleibt, während andererseits auch keine Nachteile - etwa Oxidationen - durch das beschriebene Schutzgas verursacht werden. Mit dem stabilisierten Lichtbogen geht prinzipiell eine verbesserte Wärmeübertragung einher, die sowohl zu einem günstigem Fließ- und Benetzungsverhalten des Schweiß- oder Schmelzbades als auch zu einer vorteilhaften Schmelzverbindung zwischen Grundwerkstoff und Schweißzusatzwerkstoff führt. Ferner wird eine günstige Ausgasung des Schmelzbades und in der Konsequenz eine niedrige Porenhäufigkeit erzielt. Daher ergeben sich mit der Erfindung häufig - selbst in schwierigen Schweißsituationen - ausgezeichnete Schweißergebnisse.

In den Unteransprüchen sind ferner vorteilhafte Varianten und Anwendungen der Erfindung angegeben.

Im folgenden wird anhand einiger Anwendungsbeispiele die Erfindung näher erläutert.

| | |
|---|---|
| Beispiel 1: | MIG-(bzw. MAG-) Schweißen einer Kehlnaht zwischen einem Al Mg 3 Blech und einem Al Mg Si 0,5 Blech mit 5 bzw. 10 mm Dicke |
| Schutzgas | 90 % Ar + 10 % He + 1 % H₂ + ca.150-250 vpm CO₂ |
| Schweißdraht | S-AlSi5 - 1,6 mm Stärke |
| Drahtvorschub | ca. 5 m/min |
| Schweißspannung | 24-28 V (geringfügig absenkbar im Vergleich zum Üblichen) |
| Schweißstrom | 200 A |

| | |
|---|---|
| Beispiel 2: | WIG-Schweißen einer Kehlnaht bei zwei AL 99.5 Blechen mit der Stärke von 1 mm |
| Schutzgas | 78 % Ar + 20 % He + 2 % H₂ + 250 vpm CO₂ oder O₂ |
| Schweißstrom | 47 A |

| | |
|---|---|
| Beispiel 3: | MIG- (bzw. MAG-) Schweißen einer Kehlnaht bei zwei Chrom-Nickel-Blechen mit einer Stärke von 5 mm |
| Schweißdraht | artgleich |
| Schutzgas | 77 % Ar + 20 % He + 1-3 % H₂ + 300 bis 1000 vpm O₂/CO₂ |
| Schweißstrom und Schweißspannung | wie üblich |

| | |
|---|---|
| Beispiel 4: | MIG- (bzw. MAG-) Schweißen einer Kehlnaht bei zwei Chrom-Nickel-Blechen mit einer Stärke von 5 mm |
| Schweißdraht | artgleich |
| Schutzgas | 47 % Ar + 50 % He + 1-3 % H₂ + 300 bis 1000 vpm O₂/CO₂ |
| Schweißstrom und Schweißspannung | wie üblich |

| | |
|---|---|
| Beispiel 5: | MIG- (bzw. MAG-) Schweißen einer Kehlnaht zwischen zwei korrosionsstabilen Bauteilen aus höherlegiertem Stahl in q-Position (Zwangslage) |
| Schweißdraht | artgleich |
| Schutzgas | 68 % Ar + 30 % He + 2 % H₂ + 400 bis 600 vpm O₂ oder CO₂ |
| Schweißstrom und Schweißspannung | wie üblich |

Bei den betreffenden Beispielfällen ist zunächst hinsichtlich des Schweißablaufes selbst festzuhalten, daß mit den erfindungsgemäßen Schweißschutzgasen im Vergleich zu reinen Argon- oder Argon-Helium-Schweißschutzgasen ein günstigerer Ablauf des Schweißvorgangs erhalten wird und zwar insbesondere dahingehend, daß ein stabiler und störungsfrei brennender Lichtbogen erhalten wird. Ebenso fällt bereits die alleinig optische Beurteilung des Schweißergebnisses bei den erfindungsgemäß hergestellten Schweißnähten häufig besser aus. So sind beispielsweise oft die Nahtschuppung, die Nahtflankenausbildung ganz allgemein, sowie die beim Schweißen von Aluminiumwerkstoffen auftretende Reinigungszone im besonderen, mit den vorgeschlagenen Gaszusätzen deutlich gleichmäßiger. Darüber hinaus ist auch keinerlei Oxidation oder sonstige chemische Reaktion in oder an der Schweißnaht oder in Schweißnahtumgebung bei Anwendung der Erfindung erkennbar.

Ebenso ist beim Schweißvorgang selbst das Lichtbogengeräusch erniedrigt, und man gewinnt darüber hinaus den Eindruck, daß das Schweißbad mit den erfindungsgemäßen Schweißschutzgasen im Vergleich zu den bekannten Schweißschutzgasen ohne Beimischungen einen dünnflüssigeren Zustand annimmt. In jedem Falle ergibt sich mit der erfindungsgemäßen Schweißmethode eine hochwertige Schmelzverbindung der jeweiligen Schweißpartner sowie eine günstig niedrige Porenhäufigkeit in der hergestellten Schweißnaht. Schließlich wird mit der vorgeschlagenen Methode ebenfalls eine gute Überschweißbarkeit erhalten, so daß problemlos mehrere Lagen entsprechender Scheißnähte übereinander aufbringbar sind.

Insgesamt kann also festgestellt werden, daß mit dem erfindungsgemäßen Schweißverfahren und Schutzgas gegenüber den vorbekannten Verfahren und Schutzgasen in jedem Falle gleichwertige und häufig - insbesondere in Sondersituationen - verbesserte Schweißergebnisse erzielt werden können. Das Schutzgas liefert in einer Vielzahl von Schweißsituationen, bei unterschiedlichsten Lichtbögen (Kurz-, Sprüh-, Rotationslichtbogen) und insbesondere bei speziellen Werkstoffen (korrosionsstabilen Stählen, Ni-Werkstoffen, Aluminium) und Sondersituationen einen ausgezeichnet stabilen Schweißvorgang mit hoher Nahtqualität und dies gerade auch beim Zwangslagenschweißen.

## Patentansprüche

1. Schutzgas-Lichtbogen-Schweißverfahren,
bei dem im Schweißbetrieb ein Schutzgasstrom kontinuierlich benachbart zur Elektrode der Schweißstelle zugeführt wird,
wobei sich das Schutzgas zu wesentlichen Teilen aus Argon oder einem Gemisch aus Argon und Helium zusammensetzt und
wobei dieses außerdem eine Beimischung von lediglich 50 bis 1000 vpm (0,005 bis 0,10 Vol-%) Kohlendioxid und/oder Sauerstoff aufweist,
**dadurch gekennzeichnet**,
daß das Schutzgas in einem Anteilsbereich von 0,5 bis 4 Vol-% Wasserstoff enthält.

2. Schutzgas-Lichtbogen-Schweißverfahren nach Anspruch 1, dadurch gekennzeichnet, daß das Schutzgas mindestens 40 Vol-% Argon und 10 bis 55 Vol-% Helium enthält.

3. Schutzgas-Lichtbogen-Schweißverfahren nach Anspruch 1 oder 2, dadurch gekennzeichnet, daß das Schutzgas aus 46,9 bis 76,9 Vol-% Argon, aus 20 bis 50 Vol-% Helium, aus 1 bis 3 Vol-% Wasserstoff, sowie aus einer Beimischung von 150 bis 800 vpm Kohlendioxid und/oder Sauerstoff zusammengesetzt ist.

4. Schutzgas-Lichtbogen-Schweißverfahren nach einem der Ansprüche 1 bis 3, dadurch gekennzeichnet, daß das Schutzgas als Fertiggemisch bereitgestellt wird.

5. Schutzgas-Lichtbogen-Schweißverfahren nach einem der Ansprüche 1 bis 4, dadurch gekennzeichnet, daß das Schutzgas an Ort und Stelle des Einsatzes aus den betreffenden Komponenten und unter Einsatz einer Vormischstufe gemischt wird.

6. Schutzgas zum Lichtbogenschweißen unterschiedlichster Werkstoffe, insbesondere jedoch zum Schweißen von höherlegierten korrosionsstabilen Stählen, Nickel- und Aluminiumwerkstoffen, wobei sich das Schutzgas zu wesentlichen Teilen aus Argon oder einem Gemisch aus Argon und Helium zusammensetzt und
wobei dieses eine Beimischung von 50 bis 1000 vpm (0,005 bis 0,10 Vol-%) Kohlendioxid und/oder Sauerstoff aufweist,
**dadurch gekennzeichnet**,
daß das Schutzgas in einem Anteilsbereich von 0,5 bis 4 Vol-% Wasserstoff enthält.

7. Schutzgas zum Lichtbogenschweißen nach Anspruch 6, dadurch gekennzeichnet, daß das Schutzgas mindestens 40 Vol-% Argon und 10 bis 55 Vol-% Helium enthält.

8. Schutzgas zum Lichtbogenschweißen nach Anspruch 6 oder 7, dadurch gekennzeichnet, daß das Schutzgas aus 46,9 bis 76,9 Vol-% Argon, 20 bis 50 Vol-% Helium, 1 bis 3 Vol-% Wasserstoff, sowie aus 150 bis 800 vpm Kohlendioxid und/oder Sauerstoff zusammengesetzt ist.

9. Anwendung des Verfahrens nach Anspruch 1 bis 5 und der Schutzgase gemäß Anspruch 6 bis 8 beim Schweißen in Zwangslage, insbesondere in q-Position.

## Claims

1. Gas-shielded-arc welding process in which a shielding-gas flow is continuously fed to the welding point, adjacent to the electrode, during the welding operation, the shielding gas being composed of substantial portions of argon or a mixture of argon and helium and also having an admixture of merely 50 to 1000 vpm (0.005 to 0.10 % by volume) of carbon dioxide and/or oxygen, characterized in that the shielding gas contains hydrogen in a range of 0.5 to 4 % by volume.

2. Gas-shielded-arc welding process according to Claim 1, characterized in that the shielding gas contains at least 40 % by volume of argon and 10 to 55 % by volume of helium.

3. Gas-shielded-arc welding process according to Claim 1 or 2, characterized in that the shielding gas is composed of 46.9 to 76.9 % by volume of argon, 20 to 50 % by volume of helium, 1 to 3 % by volume of hydrogen and also an admixture of 150 to 800 vpm of carbon dioxide and/or oxygen.

4. Gas-shielded-arc welding process according to one of Claims 1 to 3, characterized in that the shielding gas is prepared as a mixture ready for use.

5. Gas-shielded-arc welding process according to one of Claims 1 to 4, characterized in that the shielding gas is mixed from the relevant components at the place of use and while using a premix stage.

6. Shielding gas for arc welding the most varied materials, but in particular for welding higher-alloy, corrosion-resistant steels, nickel and aluminium materials, the shielding gas being composed of substantial portions of argon or a mixture of argon and helium and having an admixture of 50 to 1000 vpm (0.005 to 0.10 % by volume) of carbon dioxide and/or oxygen, characterized in that the shielding gas contains hydrogen in a range of 0.5 to 4 % by volume.

7. Shielding gas for arc welding according to Claim 6, characterized in that the shielding gas contains at least 40 % by volume of argon and 10 to 55 % by volume of helium.

8. Shielding gas for arc welding according to Claim 6 or 7, characterized in that the shielding gas is composed of 46.9 to 76.9 % by volume of argon, 20 to 50 % by volume of helium, 1 to 3 % by volume of hydrogen and also of 150 to 800 vpm of carbon dioxide and/or oxygen.

9. Use of the process according to Claims 1 to 5 and of the shielding gases according to Claims 6 to 8 when welding in a constrained position, in particular in a horizontal-vertical position.

## Revendications

1. Procédé de soudage à l'arc sous gaz protecteur, dans lequel lors du soudage, un courant de gaz protecteur est amené continuellement au voisinage de l'électrode de la position de soudage,
où le gaz protecteur se compose en partie essentielle d'argon ou d'un mélange d'argon et d'hélium, et
où celui-ci présente en outre, un mélange de simplement 50 à 1000 vpm (0,005 à 0,10% en volume) de dioxyde de carbone et/ou d'oxygène,
caractérisé en ce que le gaz protecteur contient de l'hydrogène, dans un intervalle de quantité de 0,5 à 4% en volume.

2. Procédé de soudage à l'arc sous gaz protecteur suivant la revendication 1, caractérisé en ce que le gaz protecteur contient au moins 40% en volume d'argon et 10 à 55% en volume d'hélium.

3. Procédé de soudage à l'arc sous gaz protecteur suivant la revendication 1 ou 2, caractérisé en ce que le gaz protecteur se compose de 46,9 à 76,9% en volume d'argon, de 20 à 50% en volume d'hélium, de 1 à 3% en volume d'hydrogène, ainsi que d'un mélange de 150 à 800 vpm de dioxyde de carbone et/ou d'oxygène.

4. Procédé de soudage à l'arc sous gaz protecteur suivant l'une quelconque des revendications 1 à 3, caractérisé en ce que le gaz protecteur est tenu prêt sous forme d'un mélange terminé.

5. Procédé de soudage à l'arc avec gaz protecteur suivant l'une quelconque des revendications 1 à 4, caractérisé en ce que le gaz protecteur est mélangé au lieu et à la position de l'apport des composants considérés et par introduction d'une étape de prémélange.

6. Gaz protecteur pour soudage à l'arc, pour différents matériaux, en particulier cependant, pour le soudage des aciers fortement alliés, stables à la corrosion, des matériaux en nickel et aluminium, où le gaz protecteur se compose en partie essentielle d'argon ou d'un mélange d'argon et d'hélium, et
où celui-ci présente un mélange de 50 à 1000 vpm (0,005 à 0,10% en volume) de dioxyde de carbone et/ou d'oxygène,
caractérisé en ce que le gaz protecteur contient de l'hydrogène, dans un intervalle de quantité de 0,5 à 4% en volume.

7. Gaz protecteur pour soudage à l'arc suivant la revendication 6, caractérisé en ce que le gaz protecteur contient au moins 40% en volume d'argon et 10 à 55% en volume d'hélium.

8. Gaz protecteur pour soudage à l'arc suivant la revendication 6 ou 7, caractérisé en ce que le gaz protecteur se compose de 46,9 à 76,9% en volume d'argon, de 20 à 50% en volume d'hélium, de 1 à 3% en volume d'hydrogène, ainsi que d'un mélange de 150 à 800 vpm de dioxyde de carbone et/ou d'oxygène.

9. Utilisation du procédé suivant les revendications 1 à 5 et du gaz protecteur suivant les revendications 6 à 8, pour le soudage en situation de contrainte, en particulier en position q.
